# EUROPEAN PATENT APPLICATION

(11) **EP 4 815 436 A1**
(43) Date of publication of application: **30.09.2026**
(21) Application number: 24913311.7
(22) Date of filing: 15.10.2024
(51) Int. Cl.: H04N 9/31

(54) **PROJECTION DEVICE AND OPERATION METHOD THEREOF**

(30) Priority: 27.12.2023 KR 20230193170
(71) Applicant: Samsung Electronics Co., Ltd., Suwon-si, Gyeonggi-do 16677 (KR)
(72) Inventor: LIM, Hyungjun, Suwon-si, Gyeonggi-do 16677 (KR); CHOI, Kyuha, Suwon-si, Gyeonggi-do 16677 (KR)
(74) Representative: Gulde & Partner
(86) International application number: PCT/KR2024/015625
(87) International publication number: WO 2025/143471

(57) **Abstract**

A projection device for projecting an image, the projection device including a projector; a fisheye lens; memory; and at least one processor configured to generate a correction image that corrects distortion of an input image projected onto a screen through the fisheye lens, wherein the correction image is generated by calculating a plurality of reference locations, each calculated reference location of the plurality of calculated reference locations being based respectively on pixel coordinates of a pixel of a plurality of pixels of the generated correction image, and setting a pixel value of each pixel of the plurality of pixels of the generated correction image by referencing a pixel value of the input image corresponding to each respective calculated reference location of the plurality of calculated reference locations, and control the projector to project the generated correction image onto the screen through the fisheye lens.

## Description

### Technical Field

An embodiment of the disclosure relates to a projection device including an ultra-wide angle lens, an operating method of the projection device, and a recording medium.

### Background Art

Conventional image projector systems have a structure in which a two dimensional (2D) image is projected onto a screen having one flat surface. However, in recent years, types of images reproduced through projectors have become more diverse, and environments for reproducing such images have also become more diverse. For example, an image may be projected onto a screen by using a projector that may perform 360° projection. The projector that may perform 360° projection may include an ultra-wide angle lens.

When an image is projected onto a screen through the ultra-wide angle lens, the projected image may be greatly distorted. Accordingly, it is necessary to edit or correct an image output from the projector so that an image projected onto the screen is not greatly distorted.

### Disclosure of Invention

### Solution to Problem

According to an embodiment of the disclosure, a projection device for projecting an image includes a projector; a fisheye lens; memory; and at least one processor.

According to an embodiment of the disclosure, the at least one processor may be configured to generate a correction image that corrects distortion of an input image projected onto a screen through the fisheye lens, wherein the correction image is generated by calculating a plurality of reference locations, each calculated reference location of the plurality of calculated reference locations being based respectively on pixel coordinates of a pixel of a plurality of pixels of the generated correction image, and setting a pixel value of each pixel of the plurality of pixels of the generated correction image by referencing a pixel value of the input image corresponding to each respective calculated reference location of the plurality of calculated reference locations

According to an embodiment of the disclosure, the at least one processor may be configured to control the projector to project the generated correction image onto the screen through the fisheye lens.

According to an embodiment of the disclosure, provided is a method of operating a projection device for projecting an image, the projection device including a projector and a fisheye lens, the method including generating a correction image, that corrects distortion of an input image projected onto a screen through the fisheye lens, by calculating a plurality of reference locations, each calculated reference location of the plurality of calculated reference locations being based respectively on pixel coordinates of a pixel of a plurality of pixels of the generated correction image, and setting a pixel value of each pixel of the plurality of pixels of the generated correction image by referencing a pixel value of the input image corresponding to each respective calculated reference location of the plurality of calculated reference locations; and controlling the projector to project the generated correction image onto the screen through the fisheye lens.

According to an embodiment of the disclosure, provided is a non-transitory computer-readable recording medium having recorded thereon a program for executing, on a computer, a method of operating a projection device for projecting an image.

### Brief Description of Drawings

The above and other aspects, features, and advantages of certain embodiments of the disclosure will be more apparent from the following description, taken in conjunction with the accompanying drawings listed below.
FIGS. 1A and 1B are diagrams illustrating an operation in which a projection device corrects distortion, according to an embodiment of the disclosure.
FIG. 2A is a diagram illustrating pixel locations of an input image and a correction image and projection points of a projection screen, according to an embodiment of the disclosure.
FIG. 2B is a diagram illustrating an input image, a correction image, and a projection screen, according to an embodiment of the disclosure.
FIG. 3 is a block diagram illustrating a configuration of a projection device, according to an embodiment of the disclosure.
FIG. 4A is a flowchart illustrating a method by which a projection device generates a correction image, according to an embodiment of the disclosure.
FIG. 4B is a detailed flowchart illustrating a method by which a projection device generates a correction image, according to an embodiment of the disclosure.
FIGS. 5A and 5B are diagrams for describing an operation of referencing a pixel of an input image to generate a correction image, according to an embodiment of the disclosure.
FIG. 5C is a diagram for describing a relationship between a reference location and a correction image, according to an embodiment of the disclosure.
FIG. 6 is a flowchart illustrating a method by which a projection device generates a correction image by using a low-frequency filter, according to an embodiment of the disclosure.
FIGS. 7A, 7B, and 7C are diagrams for describing an operation of calculating a reference interval of an input image, according to an embodiment of the disclosure.
FIG. 8 is a diagram illustrating an example of low-frequency filters applied to areas of an input image, according to an embodiment of the disclosure.
FIG. 9 is a flowchart for describing an operation in which a projection device adjusts a size of an effective pixel area of a correction image, according to an embodiment of the disclosure.
FIG. 10 is a diagram illustrating an operation in which a projection device adjusts a size of an effective pixel area of a correction image according to a distance parameter, according to an embodiment of the disclosure.
FIG. 11 is a diagram illustrating an operation of determining a size of a projection screen and a size of a correction image according to positional relationship information between a projection device and a screen, according to an embodiment of the disclosure.
FIG. 12 is a diagram for describing an operation in which a projection device projects an image to a multi-screen, according to an embodiment of the disclosure.
FIG. 13 is a diagram illustrating an example of a multi-surface input image and a multi-surface correction image, according to an embodiment of the disclosure.
FIG. 14 is a diagram illustrating a graphical user interface enabling adjustment of a correction image, according to an embodiment of the disclosure.
FIG. 15 is a diagram illustrating a detailed configuration of a projection device, according to an embodiment of the disclosure.

### Mode for the Invention

Throughout the disclosure, the expression "at least one of a, b or c" indicates only a, only b, only c, both a and b, both a and c, both b and c, all of a, b, and c, or variations thereof.

Hereinafter, an embodiment of the disclosure will be described in detail with reference to the accompanying drawings so that the embodiment of the disclosure may be easily implemented by one of ordinary skill in the art. However, the disclosure may be embodied in many different forms and is not limited to the embodiment of the disclosure set forth herein.

In the disclosure, general terms that have been widely used nowadays are selected in consideration of functions of the disclosure, but various other terms may be selected according to the intentions of technicians in the art, precedents, new technologies, etc. Accordingly, the terms used herein should be defined not based on the names thereof but based on the meanings thereof and the whole context of the disclosure.

Also, the terms used herein are for the purpose of describing certain embodiment of the disclosure only and are not intended to be limiting of the disclosure.

Throughout the specification, when a component is referred to as being "connected" to another component, it will be understood to include that the component is "directly connected" to the other component or is "electrically connected" to the other component with another component therebetween.

In the specification and particularly in the claims, "the" and similar referents may be used to indicate both singular and plural forms. Operations for describing a method according to the disclosure may be performed in a suitable order unless the context clearly dictates otherwise. The disclosure is not limited to the order of the operations described.

The expressions "in an embodiment" and the like appearing in various parts of the specification are not necessarily referring to the same embodiment of the disclosure.

An embodiment of the disclosure may be represented by functional block configurations and various operations. Some or all of functional blocks may be implemented by various numbers of hardware and/or software configurations for performing certain functions. For example, the functional blocks of the present disclosure may be implemented by one or more microprocessors or by circuit components for a certain function. Also, for example, the functional blocks of the disclosure may be implemented in various programming or scripting languages. The functional blocks may be implemented in an algorithm executed by one or more processors. In addition, the present disclosure may employ related-art techniques for electronic configuration, signal processing, and/or data processing, etc. The terms "mechanism", "element", "means" and "configuration" may be used broadly and are not limited to mechanical and physical components.

Also, connection lines or connection members between components illustrated in the drawings are merely illustrative of functional connections and/or physical or circuit connections. In an actual device, connections between components may be represented by various functional connections, physical connections, or circuit connections that are replaceable or added.

Also, the term "... unit" or "... module" refers to a unit that performs at least one function or operation, and the unit may be implemented as hardware or software or as a combination of hardware and software.

The terms "processor" may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In addition, in the specification, the term "user" refers to a person who uses a projection device, and may include a consumer, an evaluator, a viewer, an administrator, or an installer. Also, the term "manufacturer" or "provider" used herein may refer to a manufacturer that manufactures a projection device and/or components included in the projection device.

The term "image" used herein may include a still image, a graphic, a picture, a frame, a moving image including a plurality of consecutive still images, or a video.

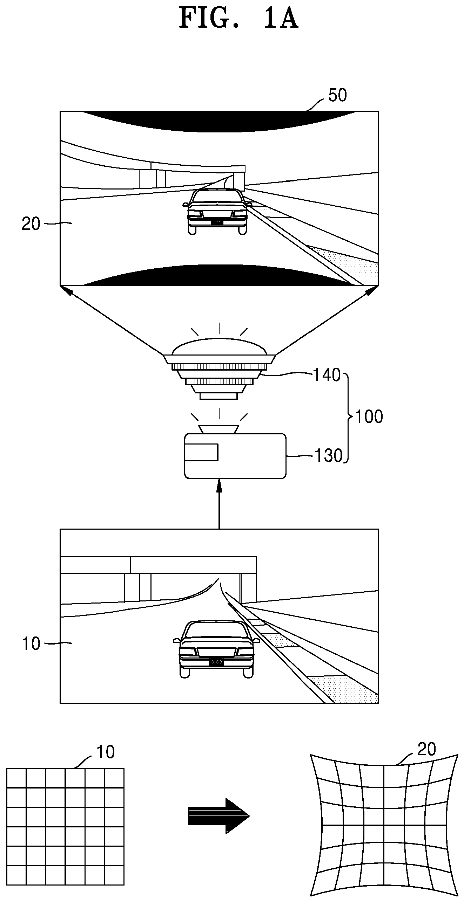

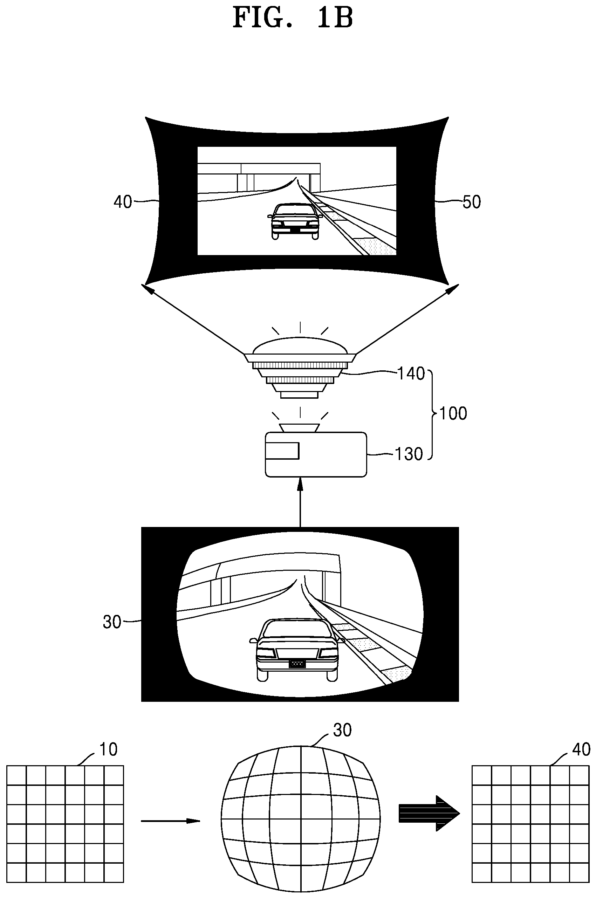

FIGS. 1A and 1B are diagrams illustrating an operation in which a projection device corrects distortion, according to an embodiment of the disclosure.

Referring to FIGS. 1A and 1B, a projection device 100 according to an embodiment of the disclosure may include a projector 130 and a fisheye lens 140.

The projection device 100 according to an embodiment of the disclosure may perform image projection. For example, the projection device 100 may perform 360° projection. For example, the projection device 100 may project an image onto a screen. A screen or a space onto which an image is projected may be configured in various ways. For example, the screen or space to which an image is projected may be a single screen, a multi-screen, dome shaped or hemispherical. The projection device 100 may project an image onto a screen 50 through the fisheye lens 140.

The projector 130 may include a light source for generating light, a lens, etc. The projector 130 may perform projection by driving the light source or adjusting a direction, location, or angle of projection.

The fisheye lens 140 may be an ultra-wide angle lens having a wider viewing angle than a general lens. For example, a viewing angle of the fisheye lens 140 may be 180° or more. The projection device 100 may project an image onto the entire screen that is a single screen, a multi-screen, dome shaped or hemispherical, through the fisheye lens 140. Due to characteristics of the fisheye lens 140, the image projected through the fisheye lens 140 has radial distortion.

For example, as shown in FIG. 1A, when the projection device 100 according to an embodiment of the disclosure projects an input image 10 onto the screen 50 through the fisheye lens 140, pincushion distortion may occur in an image 20 displayed on the screen 50. Pincushion distortion has a shape in which a central area of an image appears to be reduced and an outer area of the image appears to be enlarged.

According to an embodiment of the disclosure, when the input image 10 is transmitted through the fisheye lens 140, areas of the input image 10 have the same size, but in the image 20 displayed on the screen 50 an outer area may be projected to be larger than a central area.

Referring to FIG. 1B, the projection device 100 according to an embodiment of the disclosure may correct pincushion distortion by using a correction image corresponding to reverse deformation to the pincushion distortion.

For example, the projection device 100 according to an embodiment of the disclosure may generate a correction image 30 having barrel distortion corresponding to the reverse deformation to the pincushion distortion, from the input image 10. Barrel distortion has a shape in which a central area of an image appears to be enlarged and an outer area of the image appears to be reduced.

The projection device 100 according to an embodiment of the disclosure may project the correction image 30 corresponding to the reverse deformation to the pincushion distortion onto the screen 50. The correction image 30 corresponding to the reverse deformation to the pincushion distortion may be distorted through the fisheye lens 140. Because the correction image 30 has a shape corresponding to the reverse deformation to the pincushion distortion, the correction image 30 may be distorted through the fisheye lens 140 and may be projected onto the screen 50 in the same shape as the input image 10. Pincushion distortion may not occur in an image 40 displayed on the screen 50.

The projection device 100 according to an embodiment of the disclosure may generate the correction image 30 by correcting pixel values so that a size of a central area of the input image 10 increases and a size of an outer area decreases. When the correction image 30 is transmitted through the fisheye lens 140, a central area and an outer area may be shown in the same size in the image 40 displayed on the screen 50. The projection device 100 may prevent image distortion caused by the fisheye lens 140 by projecting the correction image 30.

Hereinafter, a specific method by which the projection device 100 according to an embodiment of the disclosure generates a correction image by referencing an input image will be described in detail with reference to the drawings.

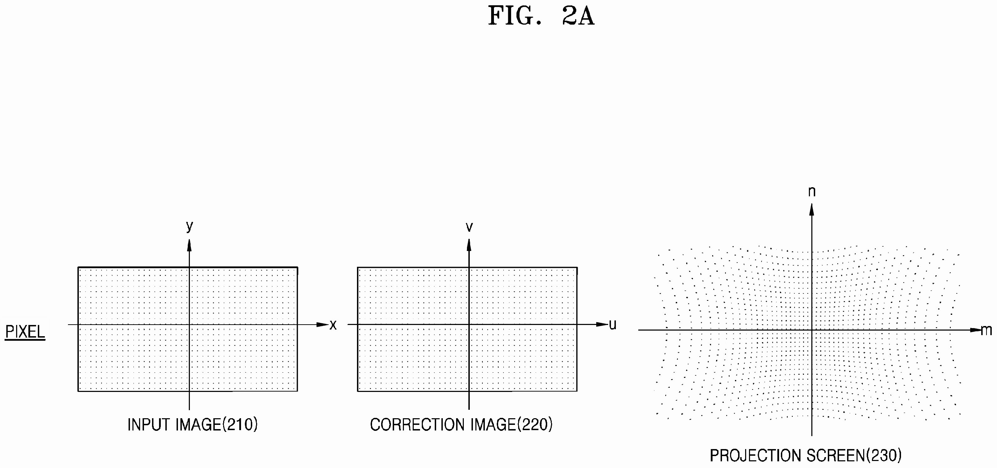

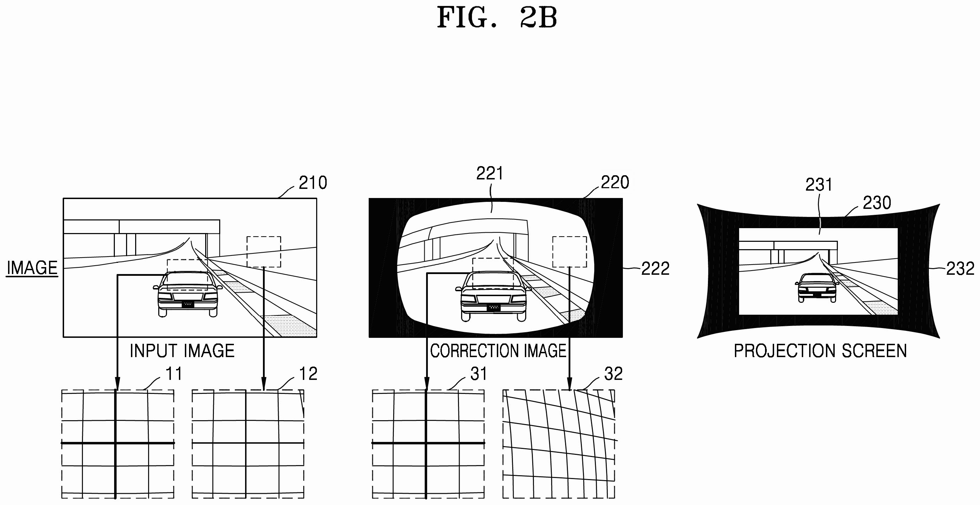

FIG. 2A is a diagram illustrating pixel locations of an input image and a correction image and projection points of a projection screen, according to an embodiment of the disclosure. FIG. 2B is a diagram illustrating an input image, a correction image, and a projection screen, according to an embodiment of the disclosure.

In FIG. 2A, a plurality of pixels constituting an input image 210, a plurality of pixels constituting a correction image 220, and a plurality of projection points constituting a projection screen 230 are illustrated. In FIG. 2B, an image in which a pixel value is written to each of a plurality of pixels and an image displayed on the screen 50 are illustrated. The input image 210, the correction image 220, and the projection screen 230 may respectively correspond to the input image 10, the correction image 30, and the image 40 displayed on the screen 50 of FIG. 1B.

Referring to FIG. 2A, for example, when it is assumed that the input image 210 has 1920x1080 pixels and center coordinates of the input image 210 are (0,0), a coordinate range of the input image 210 may be x=[-960 ~ +959] and y=[-540-+539]. An interval between a plurality of pixels (hereinafter, referred to as a pixel interval) belonging to the input image 210 may be constant.

Because the correction image 220 is an image corrected from the input image 210, the correction image 220 may have the same number of pixels as the input image 210. For example, when it is assumed that the correction image 220 has 1920x1080 pixels and center coordinates of the correction image 220 are (0,0), a coordinate range of the correction image 220 may be u=[-960 ~ +959] and v=[-540-+539]. A pixel interval of the correction image 220 may be constant.

When an image is projected onto a screen through a fisheye lens, coordinates of projection points belonging to the projection screen 230 may be calculated by using Equation 1. $\left[m n\right] = L \times \left[u v\right] \times \left({a}_{0}+{a}_{2}{ρ}^{2}+{a}_{3}{ρ}^{3}+{a}_{4}{ρ}^{4}\right) , ρ = \sqrt{{u}^{2} + {v}^{2}}$

In Equation 1, [m n] may denote projection point coordinates after passing through the fisheye lens, [u v] may denote pixel coordinates of an image, ρ may denote a distance from center coordinates, and L may denote a distance between the projection device 100 and the screen. a may be a preset value according to a specification of the fisheye lens. For example, it may be assumed that the center coordinates of the image are (0, 0).

Although the image is the coordinates (u, v) of the correction image 220, the image may be the coordinates (x, y) of the input image 210.

When an image is projected onto the screen through the fisheye lens, an interval between projection points (hereinafter, referred to as a projection interval) belonging to the projection screen 230 may vary according to an area. For example, a projection interval of an outer area may be wider than a projection interval of a central area of the projection screen 230. In this case, while a pixel interval is constant in the image, an outer area is projected to be larger than a central area in the projection screen 230. Here, the image may be the input image 210 or the correction image 220.

A size of the projection screen 230 and an interval between projection points may be adjusted based on the distance L between the projection device 100 and the screen.

Referring to FIG. 2B, in the case of the input image 210, a size of a central area 11 and a size of an outer area 12 may be the same. Because the central area 11 and the outer area 12 in the input image 210 have the same size, when the input image 210 is projected through the fisheye lens, an outer area may appear to be larger than a central area in a projection screen (see 20 of FIG. 1A).

The projection device 100 according to an embodiment of the disclosure may correct pixel values so that a size of a central area of the input image 210 increases and a size of an outer area decreases. The correction image 220 according to an embodiment of the disclosure may be an image whose pixel values are corrected from the input image 210 so that a size of a central area increases and a size of an outer area decreases. Accordingly, in the case of the correction image 220, a size of a central area 31 and a size of an outer area 32 may be different from each other. For example, a size of the central area 31 of the correction image 220 may be greater than a size of the outer area 32.

When the correction image 220 is projected through the fisheye lens, a central area and an outer area may appear to have the same size in the projection screen 230. The projection screen 230 may be shown as an image with no distortion, like the input image 210.

In more detail, the projection device 100 according to an embodiment of the disclosure may generate the correction image 220 including a first area 221 having a barrel distortion shape by using pixel values of the input image 210. The correction image 220 may further include a second area 222 around the first area 221. The first area 221 of the correction image 220 may be generated by referencing the pixel values of the input image 210 and may be referred to as an effective pixel area. The second area 222 of the correction image 220 may be generated by using a preset value (e.g., black) without referencing the pixel values of the input image 210 and may be referred to as a black area.

When the correction image 220 is projected through the fisheye lens, the projection screen 230 may include a first area 231 corresponding to the first area 221 of the correction image 220 and a second area 232 corresponding to the second area 222 of the correction image 220. The first area 231 may be an area where there are the pixel values of the input image, and the second area 232 may be an area where there are no pixel values of the input image. The first area 231 of the projection screen 230 may be shown as an image with no distortion, like the input image 210. Herein, 'interval' can be represent 'partial interval', 'gap', or 'distance', 'space'.

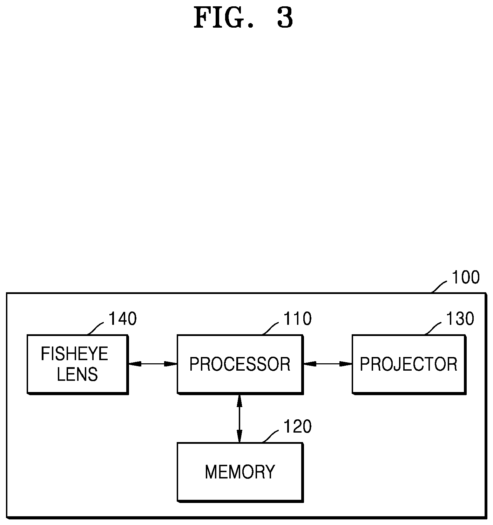

FIG. 3 is a block diagram illustrating a configuration of a projection device, according to an embodiment of the disclosure.

Referring to FIG. 3, the projection device 100 according to an embodiment of the disclosure may include a processor 110, memory 120, a projector 130, and a fisheye lens 140.

The processor 110 controls an overall operation of the projection device 100 and a signal flow between internal elements of the projection device 100, and performs a function of processing data.

The processor 110 may include at least one of a central processing unit (CPU), a graphics processing unit (GPU), or a video processing unit (VPU). Alternatively, according to an embodiment of the disclosure, the processor 110 may be implemented as a system-on-chip (SoC) in which at least one of a CPU, a GPU, or a VPU is integrated. Alternatively, the processor 110 may further include a neural processing unit (NPU). The processor 110 may include a single-core, a dual-core, a triple-core, a quad-core, or multiples thereof. Also, the processor 110 may include at least one processor.

The memory 120 may store various data, a program, or an application for driving and controlling the projection device 100.

Also, the program stored in the memory 120 may include one or more instructions. The program (the one or more instructions) or the application stored in the memory 120 may be executed by the processor 110.

The processor 110 according to an embodiment of the disclosure may execute the one or more instructions stored in the memory 120 to generate a correction image that corrects distortion of an input image projected onto a screen through the fisheye lens 140.

The processor 110 according to an embodiment of the disclosure may generate a correction image that references a pixel value of the input image, by using a reference location. The reference location may correspond to a projection location of a pixel predicted when an image with a constant pixel interval is projected onto the screen through the fisheye lens 140. The processor 110 according to an embodiment of the disclosure may generate a correction image corresponding to reverse deformation to projection distortion, through the reference location corresponding to the projection location predicted when the correction image is projected.

The reference location according to an embodiment of the disclosure may correspond to pixel coordinates of the input image for referencing the pixel value of the input image. The processor 110 according to an embodiment of the disclosure may set the pixel value of the pixel of the input image having the coordinates corresponding to the reference location as a pixel value of the correction image.

The processor 110 according to an embodiment of the disclosure may calculate the reference location through Equation 2 similar to Equation 1. $\left[x y\right] = d \times \left[u v\right] \times \left({a}_{0}+{a}_{2}{ρ}^{2}+{a}_{3}{ρ}^{3}+{a}_{4}{ρ}^{4}\right) , ρ = \sqrt{{u}^{2} + {v}^{2}}$

In Equation 2, [x y] may denote the reference location corresponding to the pixel coordinates of the input image, [u v] may denote pixel coordinates of the correction image, ρ may denote a distance from center coordinates, a may denote a specification of the fisheye lens, and d may denote a distance parameter. An interval between reference locations (reference interval) may be adjusted based on the distance parameter.

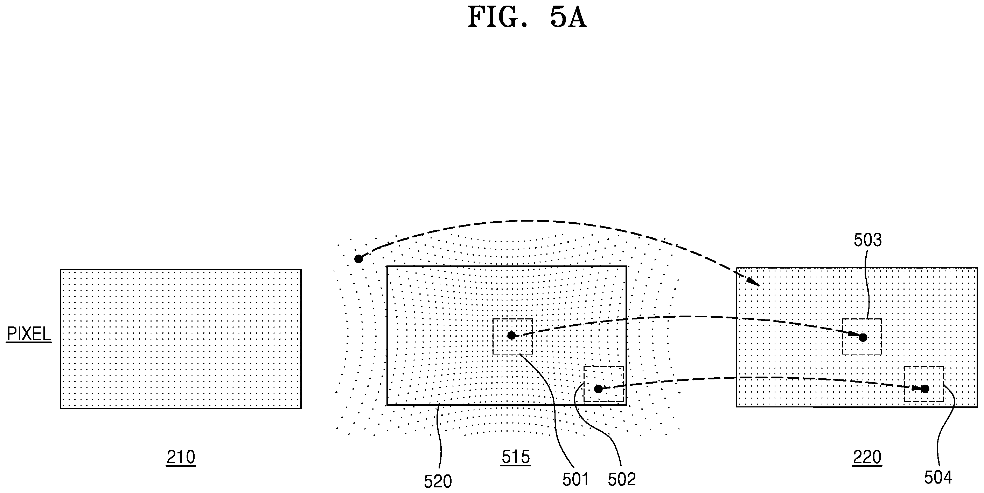

The processor 110 according to an embodiment of the disclosure may calculate a reference location, based on at least one of the pixel coordinates of the correction image, the distance parameter, the specification of the fisheye lens 140, or the distance between the center coordinates of the correction image and the pixel coordinates of the correction image. For example, in FIG. 5A, pixels of the input image 210, pixels of the correction image 220, and a reference image 515 having a reference location are illustrated.

The interval between reference locations (reference interval) calculated according to an embodiment of the disclosure may correspond to an interval between projection points as pixels of the correction image are transmitted through the fisheye lens 140. For example, the reference interval may be narrow in a central area and wide in an outer area.

The processor 110 according to an embodiment of the disclosure may obtain a pixel value of the correction image by referencing the pixel value of the input image corresponding to the reference location. For example, the processor 110 may set the pixel value of the input image as a pixel value of the correction image through Equation 3. $O \left(u, v\right) = I \left(x, y\right)$

In Equation 3, O may denote the pixel value of the correction image, and I may denote the pixel value of the input image. The pixel value of the input image may be a value pre-stored in the memory 120.

The processor 110 according to an embodiment of the disclosure may draw the correction image by using the pixel value of the input image pre-stored in the memory 120. When the correction image is drawn, it may mean that a pixel value is written to each pixel of the correction image by using the pixel value of the input image.

The processor 110 according to an embodiment of the disclosure may read the pixel value of the input image corresponding to the reference location for each pixel coordinates of the correction image. The processor 110 may draw the correction image on the memory 120 by using the pixel value read from the input image. When the correction image is drawn on the memory 120, it may mean that a pixel value is written for each pixel of the correction image.

For example, the processor 110 may identify pixel coordinates of the input image located at the reference location (x, y) calculated for each pixel coordinates (u, v) of the correction image and may read a pixel value of the input image. The processor 110 may write the pixel value read from the input image to a pixel of the correction image.

The processor 110 according to an embodiment of the disclosure may generate the correction image including a first area (effective pixel area) in which the pixel value of the input image is reflected and a second area (black area) in which the pixel value of the input image is not reflected.

The processor 110 according to an embodiment of the disclosure may identify whether the reference location calculated from the pixel coordinates of the correction image through Equation 2 is within a coordinate range of the input image. When the reference location is within the coordinate range of the input image, the processor 110 may set a pixel value of the input image as a pixel value of the correction image as in Equation 3. For example, when a pixel of the input image exists at the reference location (x, y) calculated from the pixel coordinates (u, v) of the correction image, the processor 110 may set a pixel value of the pixel as a pixel value of the correction image. The processor 110 may generate a first area to which the pixel value of the input image is written.

When the reference location calculated from the pixel coordinates of the correction image through Equation 2 is outside the coordinate range of the input image, the processor 110 according to an embodiment of the disclosure may set a defined color value as a pixel value of the correction image. For example, the defined color value may be, but is not limited to, black in which R, G, and B color values are (0, 0, 0). For example, when a pixel of the input image does not exist at the reference location (x, y) calculated from the pixel coordinates (u, v) of the correction image, a pixel value of the correction image may be set to black. The processor 110 may generate a second area to which the pixel value of the input image is not written but the defined color value is written.

The correction image according to an embodiment of the disclosure may have a pixel value that is barrel-distorted from the pixel value of the input image. The first area of the correction image may have a barrel-distorted shape corresponding to reverse deformation to projection distortion of the input image. Because the second area is an area where there is no pixel of the input image, the second area may be located around the first area.

The processor 110 according to an embodiment of the disclosure may predict projection distortion (pincushion distortion) through the reference location and may generate a correction image (barrel distortion) in which the projection distortion is reverse-deformed. For example, the processor 110 may predict projection distortion in which a central area of an image decreases and an outer area increases, and may generate a correction image in which a central area increases and an outer area decreases so that the projection distortion is reverse-deformed. The correction image according to an embodiment of the disclosure may be an image in which the pixel value from the input image is corrected so that a central area of the input image increases and an outer area decreases. When the correction image is projected through the fisheye lens 140, a size of the central area and a size of the outer area become the same, and thus, the correction image may be shown to be the same as the input image on a projection screen.

When the processor 110 according to an embodiment of the disclosure generates the correction image in which the central area increases and the outer area decreases from the input image in which the central area and the outer area are constant, downscaling (or image reduction) may be performed on the outer area. As the downscaling is performed, aliasing may occur in the outer area. The term "aliasing" refers to a phenomenon where, when an image with fine details is excessively reduced, the details are distorted.

The processor 110 according to an embodiment of the disclosure may downscale an image by using a low-frequency filter. The processor 110 may prevent aliasing by using the low-frequency filter.

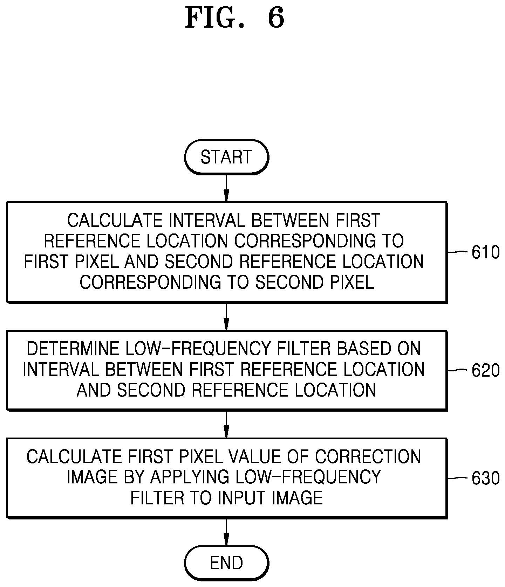

When the correction image is generated from the input image, the processor 110 according to an embodiment of the disclosure may apply a different low-frequency filter according to a size of an image that varies for each area. The processor 110 may generate the correction image by applying a different low-frequency filter for each area to the input image. The processor 110 may determine a low-frequency filter to be applied for each area by using the reference location. For example, the processor 110 may identify whether an interval between reference locations is narrow or wide and may apply a strong low-frequency filter or a weak low-frequency filter. Accordingly, the processor 110 may efficiently prevent aliasing, which will be described in more detail with reference to FIG. 6.

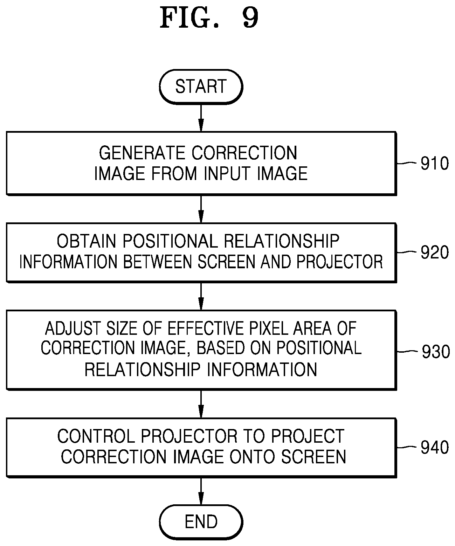

The processor 110 according to an embodiment of the disclosure may adjust a size of the first area of the correction image according to the distance parameter. For example, referring to Equation 2, the reference interval may vary according to the distance parameter, and a size of the first area of the correction image may vary according to the reference interval. For example, as the distance parameter increases, the first area of the correction image may decrease, and as the distance parameter decreases, the first area of the correction image may increase. The processor 110 may generate the correction image in which the first area is enlarged or reduced by adjusting the distance parameter, which will be described in more detail with reference to FIG. 9.

The processor 110 according to an embodiment of the disclosure may adjust the distance parameter, based on positional relationship information between the projection device 100 and the screen. The positional relationship information may include distance information and angle information between the projection device 100 and the screen.

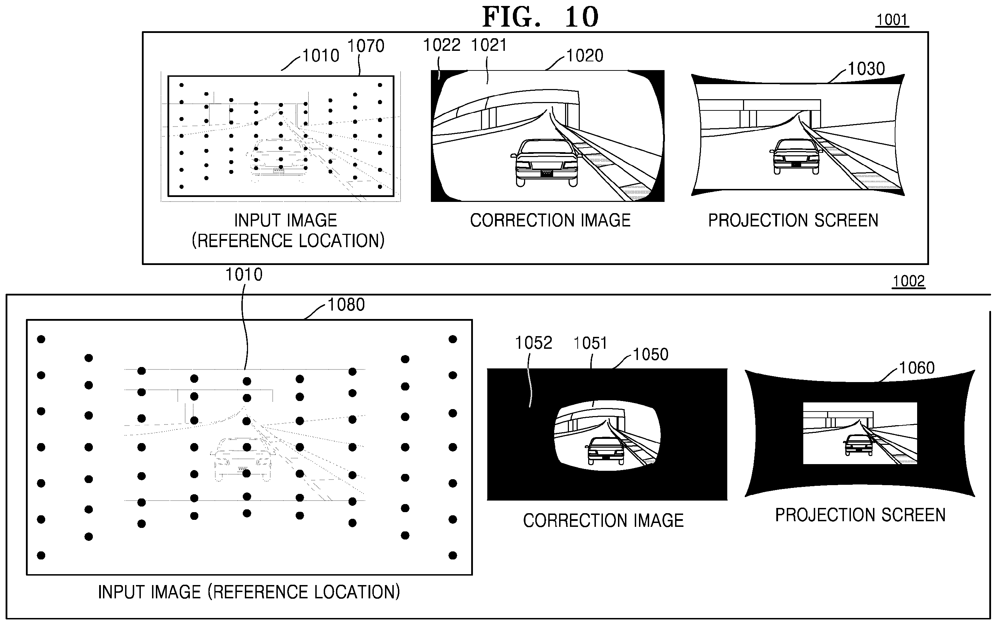

For example, as a distance between the projection device 100 and the screen increases, the projection screen may increase and a first area in the projection screen may increase. The processor 110 according to an embodiment of the disclosure may adjust the distance parameter to keep a size of the first area constant even when a distance between the projection device 100 and the screen changes. The processor 110 may display a size of the first area constant even when a distance between the projection device 100 and the screen decreases or increases, by adjusting the distance parameter based on the positional relationship information between the projection device 100 and the screen. For example, the processor 110 may increase the distance parameter so that as a distance between the projection device 100 and the screen increases, a size of the first area of the correction image decreases, which will be described in more detail with reference to FIG. 10.

The processor 110 according to an embodiment of the disclosure may determine a pixel value of the correction image, a type of the low-frequency filter to be used, and a size of the first area (object size) of the correction image, through the reference location. For example, the processor 110 may obtain a pixel value of the input image to be read as a pixel value of the correction image, through the reference location. For example, the processor 110 may determine a degree to which an image is narrowed or widened for each area when the correction image is generated and may determine a low-frequency filter to be applied to the input image, through the reference location. For example, the processor 110 may determine sizes of the first area and the second area of the correction image, through the reference location. The processor 110 according to an embodiment of the disclosure may project the generated correction image onto the screen by controlling the projector 130.

The projector 130 according to an embodiment of the disclosure may include a light source for generating light, a lens, etc. Also, the projector 130 may further include a driver for adjusting a direction, location, and angle of projection. The projector 130 may perform 360° image projection by driving the light source or adjusting a direction, location, or angle of projection according to a control signal received from the processor 110.

The fisheye lens 140 according to an embodiment of the disclosure may be an ultra-wide angle lens having a wider viewing angle than a general lens. The fisheye lens 140 has been described with reference to FIGS. 1A and 1B, and thus, a repeated description will be omitted.

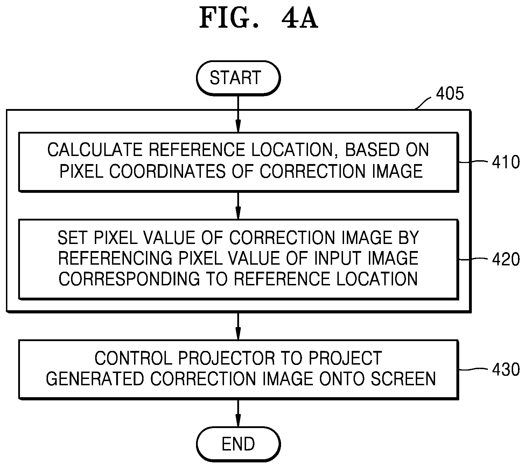

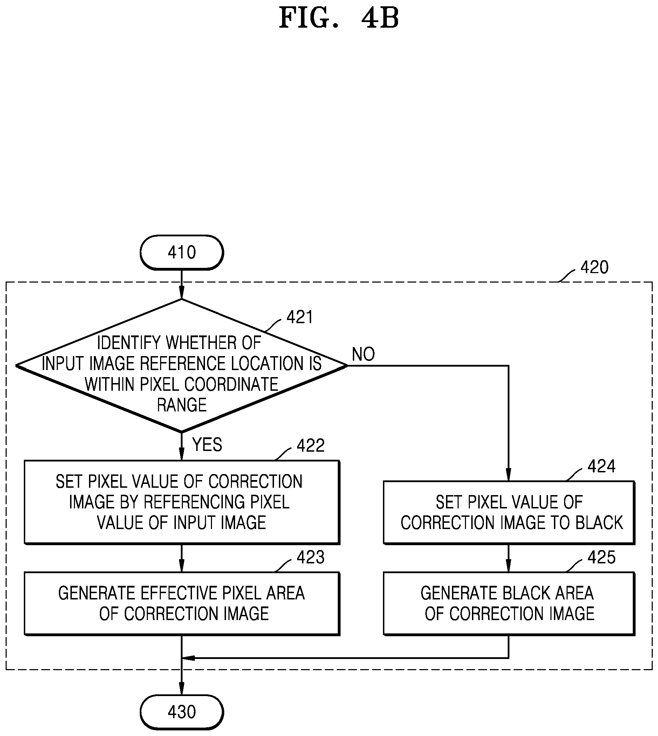

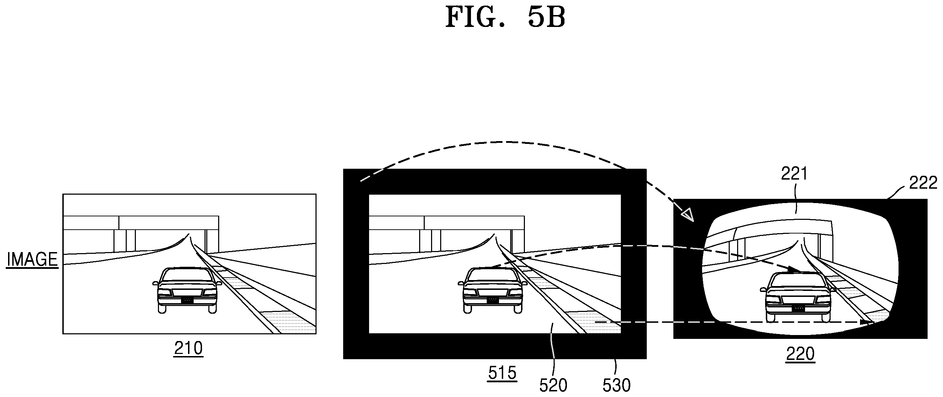

FIG. 4A is a flowchart illustrating a method by which a projection device generates a correction image, according to an embodiment of the disclosure. FIG. 4B is a detailed flowchart illustrating a method by which a projection device generates a correction image, according to an embodiment of the disclosure. FIGS. 5A and 5B are diagrams for describing an operation of referencing a pixel of an input image to generate a correction image, according to an embodiment of the disclosure. FIGS. 4A and 4B will be described in conjunction with FIGS. 5A and 5B.

Referring to FIG. 4A, in operation 405, the projection device 100 according to an embodiment of the disclosure may generate the correction image 220 that corrects distortion of an input image projected onto a screen through the fisheye lens 140. The projection device 100 according to an embodiment of the disclosure may generate the correction image 220 by performing operations 410 and 420.

In operation 410, the projection device 100 according to an embodiment of the disclosure may calculate a reference location corresponding to pixel coordinates of the input image 210, based on pixel coordinates of the correction image 220.

The projection device 100 according to an embodiment of the disclosure may calculate a reference location of the input image 210 corresponding to a projection location of a pixel predicted when the correction image is projected onto the screen through the fisheye lens 140. For example, the projection device 100 may calculate a reference location from the pixel coordinates of the correction image 220, through Equation 2.

A pixel interval of the input image 210 and the correction image 220 may be constant. For example, a pixel interval of the correction image 220 may be the same in a central area 503 and an outer area 504. In the reference image 515 with the reference location, a reference interval may be different for each area corresponding to a projection location. For example, a reference interval may be narrow in a central area 501 and wide in an outer area 502.

For example, the projection device 100 may calculate a reference location corresponding to each pixel, while moving a plurality of pixels belonging to the correction image 220 one pixel at a time. For example, when the correction image 220 has 1920x1080 pixels and center coordinates are (0,0), a coordinate range of the correction image 220 may be u=[-960 ~ +959] and v=[-540-+539]. The projection device 100 may calculate a reference location (x, y) by applying coordinates from (u, v)=(-960, -540) to (+959, +539) to Equation 2.

In operation 420, the projection device 100 according to an embodiment of the disclosure may obtain a pixel value of the correction image 220 by referencing a pixel value of the input image 210 corresponding to the reference location.

The projection device 100 according to an embodiment of the disclosure may read a pixel value of the input image 210 corresponding to the reference location calculated for each pixel coordinates of the correction image 220. For example, the projection device 100 may obtain a pixel value of the correction image 220 through Equation 3.

The projection device 100 according to an embodiment of the disclosure may write a pixel value for each of pixels constituting the correction image 220 to memory, by using the pixel value read from the input image 210.

The projection device 100 according to an embodiment of the disclosure may generate the correction image 220 including the first area 221 in which the pixel value of the input image 210 is reflected and the second area 222 in which the pixel value of the input image 210 is not reflected, which will be described in more detail with reference to FIG. 4B.

Referring to FIG. 4B, in operation 421, the projection device 100 according to an embodiment of the disclosure may identify whether the reference location calculated from the pixel coordinates of the correction image 220 is within a coordinate range 520 of the input image.

In operation 422, when the reference location is within the coordinate range 520 of the input image, the projection device 100 according to an embodiment of the disclosure may set a pixel value of the input image as a pixel value of the correction image as in Equation 3. In operation 423, the projection device 100 may generate the first area 221 of the correction image 220.

For example, when (u, v)=(0, 0), (x, y)=(0, 0) may be calculated. In this case, the reference location is within the coordinate range x=[-960 ~ +959] and y=[-540-+539] of the input image 210. The projection device 100 may set a pixel value of a pixel of the input image 210 located at (0, 0) as a pixel value of the correction image 220.

In operation 424, when the reference location is outside the coordinate range 520 of the input image, the projection device 100 according to an embodiment of the disclosure may set a defined color value as a pixel value of the correction image. For example, the reference location may be located in an external area 530 where there is no pixel value of the input image 210. In operation 425, the projection device 100 may generate the second area 222.

For example, when (u, v)=(-960, -540), it may be assumed that (x, y)=(-900, -700). In this case, because the reference location is outside the coordinate range x=[-960 ~ +959] and y=[-540-+539] of the input image, there may be no pixel of the input image 210 to be referenced. The projection device 100 may set a pixel value of a pixel located at (-960, -540) of the correction image 220 to black.

The correction image 220 according to an embodiment of the disclosure may have a pixel value that is barrel-distorted from a pixel value of the input image 210. The first area 221 of the correction image 220 may have a barrel-distorted shape corresponding to reverse deformation to projection distortion of the input image 210. The second area 222 may correspond to the external area 530 where there is no pixel of the input image 210 and may be located around the first area 221.

Referring back to FIG. 4A, in operation 430, the projection device 100 according to an embodiment of the disclosure may control a projector to project the generated correction image 220 onto the screen.

The projection device 100 according to an embodiment of the disclosure may prevent image distortion caused by the fisheye lens 140 by outputting the correction image 220. The projection device 100 may project the correction image 220 including the first area 221 in which a central area increases and an outer area decreases from the input image 210.

The correction image 220 projected through the fisheye lens 140 may be shown to be the same as the input image 210 on a projection screen. For example, the projection screen to which the correction image 220 is projected may correspond to the projection screen 230 of FIG. 2B.

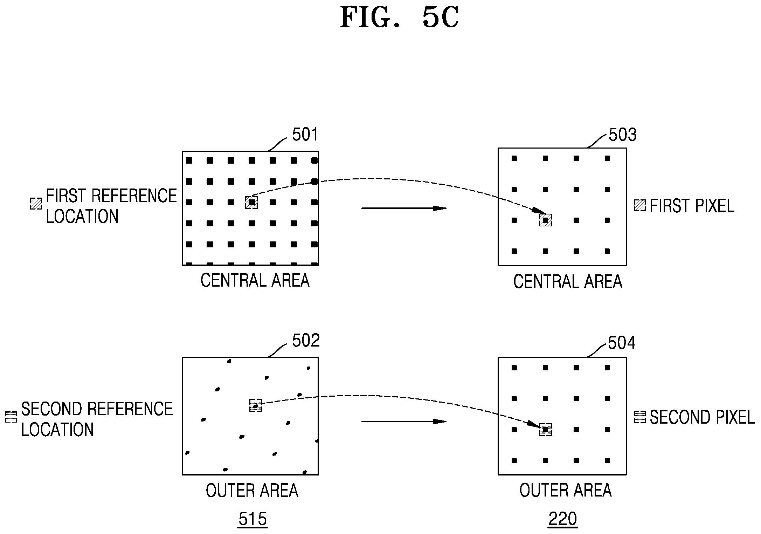

FIG. 5C is a diagram for describing a relationship between a reference location and a correction image, according to an embodiment of the disclosure. In FIG. 5C, the central area 501 and the outer area 502 of the reference image 515 and the central area 503 and the outer area 504 of the correction image 220 are illustrated.

When the projection device 100 according to an embodiment of the disclosure generates the correction image 220 from the input image 210 in which a central area and an outer area are constant, the central area may increase and the outer area may decrease. That is, image enlargement may be performed on the central area, and image reduction may be performed on the outer area. To prevent aliasing occurring as image reduction (downscaling) is performed, the projection device 100 may apply a low-frequency filter to the input image.

When the correction image 220 is generated from the input image 210, the projection device 100 according to an embodiment of the disclosure may apply a different low-frequency filter to the input image 210 according to a degree to which a size of an image increases or decreases for each area.

The projection device 100 according to an embodiment of the disclosure may identify whether the correction image 220 is enlarged or reduced from the input image 210, by using a reference location. For example, the projection device 100 may identify whether an image is enlarged or reduced for each area, by using a degree to which a reference interval is narrow and wide for each area. For example, in the case of an area with a narrow reference interval, an operation of generating a correction image from an input image may correspond to image enlargement, and in the case of an area with a wide reference interval, an operation of generating a correction image from an input image may correspond to image reduction.

For example, in the reference image 515, a reference interval of the central area 501 may be narrow, and a reference interval of the outer area 502 may be wide.

The projection device 100 may generate the correction image (image enlargement) having the central area 503 enlarged from the central area 501 having the narrow reference interval.

The projection device 100 may generate the correction image (image reduction) having the outer area 504 reduced from the outer area 502 having the wide reference interval.

The projection device 100 according to an embodiment of the disclosure may determine a low-frequency filter to be applied for each area by using a reference location. For example, the projection device 100 may use a weak low-frequency filter corresponding to the central area 501 having the narrow reference interval. The projection device 100 may use a strong low-frequency filter corresponding to the outer area 502 having the wide reference interval. The term "strong low-frequency filter" may refer to a low-frequency filter having a low transmission frequency. As a transmission frequency decreases, more high frequency components may be removed. As a transmission frequency decreases, aliasing may be more effectively prevented.

For example, the projection device 100 may use a strong low-frequency filter in the outer area 502 having large image reduction. The projection device 100 may use a strong low-frequency filter when generating the outer area 504 of the correction image 220 by using pixels of the outer area 502 on which image reduction is performed.

For example, the projection device 100 may use a weak low-frequency filter in the central area 501 having small image reduction. The projection device 100 may use a weak low-frequency filter when generating the central area 503 of the correction image 220 by using pixels of the central area 501 on which image enlargement is performed.

Hereinafter, an operation of using a different low-frequency filter for each area by calculating a reference interval will be described in more detail with reference to FIG. 6.

FIG. 6 is a flowchart illustrating a method by which a projection device generates a correction image by using a low-frequency filter, according to an embodiment of the disclosure.

Referring to FIG. 6, in operation 610, the projection device 100 according to an embodiment of the disclosure may calculate a reference interval between a first reference location corresponding to a first pixel of a correction image and a second reference location corresponding to a second pixel of the correction image. The first pixel and the second pixel may be adjacent to each other. The first reference location may be a location calculated by substituting first pixel coordinates into Equation 2. The second reference location may be a location calculated by substituting second pixel coordinates into Equation 2.

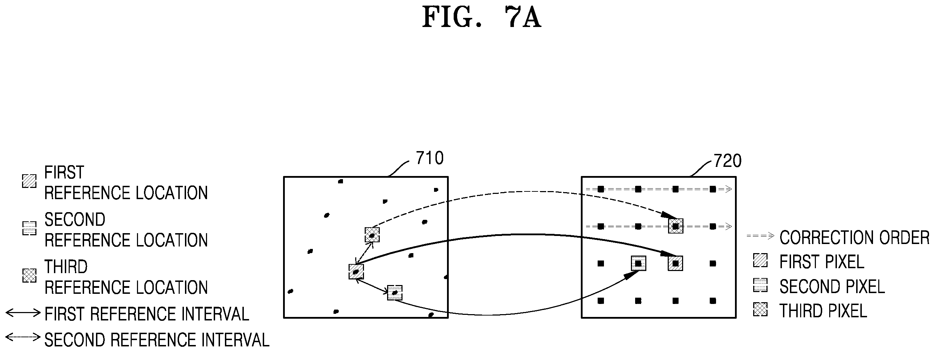

The projection device 100 according to an embodiment of the disclosure may calculate an interval between reference locations by using a first direction line segment length that connects the first reference location to the second reference location. For example, the projection device 100 may calculate the first direction line segment length as an interval between reference locations (FIG. 7A).

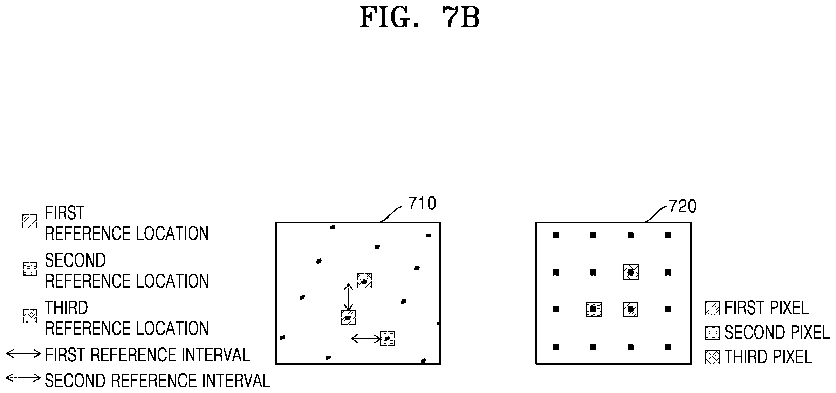

The projection device 100 according to an embodiment of the disclosure may calculate an interval between reference locations by using an orthogonal distance between the first reference location and the second reference location. For example, the projection device 100 may calculate a vertical distance and/or a horizontal distance between the first reference location and the second reference location as an interval between reference locations (FIG. 7B).

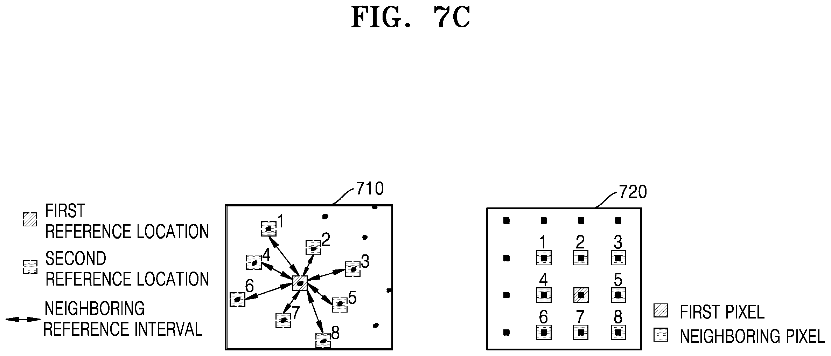

The projection device 100 according to an embodiment of the disclosure may consider an interval with one or more reference locations based on the first reference location. For example, the projection device 100 may calculate a reference interval, by considering an interval with one adjacent reference location based on the first reference location. Alternatively, for example, the projection device 100 may calculate a reference interval, by considering an interval with eight adjacent reference locations based on the first reference location (FIG. 7C).

In operation 620, the projection device 100 according to an embodiment of the disclosure may determine a low-frequency filter based on the interval between the first reference location and the second reference location.

The projection device 100 according to an embodiment of the disclosure may apply a first low-frequency filter to an input image, when the interval between the first reference location and the second reference location is greater than or equal to a threshold value.

The projection device 100 according to an embodiment of the disclosure may apply a second low-frequency filter, when the interval between the first reference location and the second reference location is less than the threshold value.

The first low-frequency filter may have a lower transmission frequency than the second low-frequency filter. As a low-frequency filter has a lower transmission frequency, more high frequency components may be removed and the low-frequency filter may be a stronger low-frequency filter. The first low-frequency filter may be referred to as a 'strong low-frequency filter', and the second low-frequency filter may be referred to as a 'weak low-frequency filter'.

In operation 630, the projection device 100 according to an embodiment of the disclosure may calculate a first pixel value of the correction image by applying the low-frequency filter to the input image.

In the projection device 100 according to an embodiment of the disclosure, image reduction according to generation of the correction image may be large in an area having a wide reference interval. Accordingly, the projection device 100 may calculate a pixel value of the correction image by applying a strong low-frequency filter to pixels of the area. The area having the wide reference interval (i.e., area having large image reduction) may correspond to an outer area of the input image.

In the projection device 100 according to an embodiment of the disclosure, image reduction according to generation of the correction image may be small in an area having a narrow reference interval. Accordingly, the projection device 100 may calculate a pixel value by applying a weak low-frequency filter to pixels of the area. The area having the narrow reference interval (i.e., area having small image reduction) may correspond to a central area of the input image.

The projection device 100 according to an embodiment of the disclosure may calculate a pixel value of the correction image by applying a different low-frequency filter for each area in the input image. The projection device 100 may generate the correction image in which aliasing is effectively prevented based on the pixel value obtained by applying the low-frequency filter for each area.

FIGS. 7A, 7B, and 7C are diagrams for describing an operation of calculating a reference interval of an input image, according to an embodiment of the disclosure.

In FIGS. 7A, 7B, and 7C, a reference image 710 including a reference location of an input image and a correction image 720 are illustrated. Pixel values of the correction image 720 may be sequentially set. A first pixel may correspond to a current pixel, a second pixel may correspond to a left pixel, and a third pixel may correspond to an upper pixel. A first reference location may correspond to a current reference location, a second reference location may correspond to a left reference location, and a third reference location may correspond to an upper reference location. A first reference interval may correspond to an interval between the first reference location and the second reference location. A second reference interval may correspond to an interval between the first reference location and the third reference location.

The projection device 100 according to an embodiment of the disclosure may calculate the first reference location by applying first pixel coordinates of the correction image 720 to Equation 2. The projection device 100 may calculate the second reference location and the third reference location by applying second pixel coordinates and third pixel coordinates of the correction image 720 to Equation 2.

Referring to FIG. 7A, the projection device 100 according to an embodiment of the disclosure may calculate a length of a line segment that connects reference locations as an interval between reference locations. For example, the projection device 100 may calculate a length of a first line segment connecting the first reference location to the second reference location as the first reference interval. For example, the projection device 100 may calculate a length of a second line segment connecting the first reference location to the third reference location as the second reference interval.

Referring to FIG. 7B, the projection device 100 according to an embodiment of the disclosure may calculate an orthogonal distance between the first reference location and the second reference location as an interval between reference locations. For example, the projection device 100 may calculate a horizontal distance between the first reference location and the second reference location horizontally adjacent to the first reference location as the first reference interval. For example, the projection device 100 may calculate a vertical distance between the first reference location and the third reference location vertically adjacent to the first reference location as the second reference interval.

The projection device 100 according to an embodiment of the disclosure may consider an interval between the first reference location and at least one reference location.

For example, the projection device 100 may calculate a reference interval by considering an interval between the first reference location and the second reference location or the third reference location adjacent to the first reference location.

Alternatively, for example, the projection device 100 may calculate a reference interval, by considering an interval with two adjacent reference locations based on the first reference location. For example, the projection device 100 may calculate a reference interval of the first reference location by using an average of the first reference interval and the second interval.

Alternatively, referring to FIG. 7C, for example, the projection device 100 may calculate a reference interval by considering an interval with eight adjacent reference locations based on the first reference location. For example, the projection device 100 may calculate a reference interval of the first reference location by using an average of intervals between the first reference location and eight adjacent reference locations.

A method of calculating a reference interval is not limited to the above example.

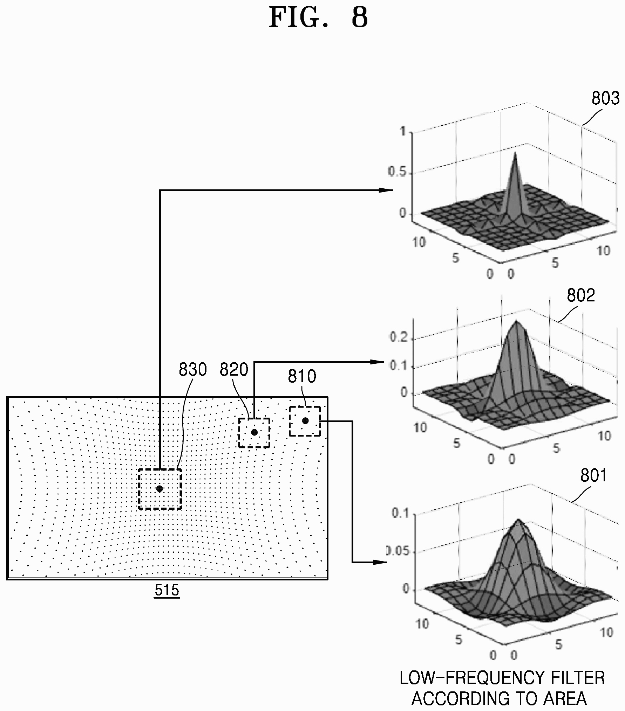

FIG. 8 is a diagram illustrating an example of low-frequency filters applied to areas of an input image, according to an embodiment of the disclosure.

Referring to FIG. 8, a different low-frequency filter may be applied to an input image for each area. For example, different low-frequency filters are applied to a first area 810, a second area 820, and a third area 830 of the input image. In FIG. 8, the reference image 515 including a reference location for referencing whether the input image is enlarged or reduced is illustrated.

However, the number of types of low-frequency filters is not limited to three, and may be at least two or more than three. Also, although the input image is divided into three areas, the disclosure is not limited thereto, and the input image may be divided into at least two areas including a central area and an outer area or may be divided into four or more areas. In FIG. 8, the first area 810 may correspond to an outer area, and the third area 830 may correspond to a central area.

An interval between reference locations belonging to the first area 810 may be greater than or equal to a first threshold value. The projection device 100 may apply a first low-frequency filter 801 as an interval between reference locations is greater than or equal to the first threshold value. The first low-frequency filter 801 may be a strong low-frequency filter and may have a low transmission frequency.

An interval between reference locations belonging to the second area 820 may be less than the first threshold value and greater than or equal to a second threshold value. The first threshold value is greater than the second threshold value. The projection device 100 may apply a second low-frequency filter 802 as an interval between reference locations is less than the first threshold value and greater than or equal to the second threshold value. The second low-frequency filter 802 may be a lower low-frequency filter than the first low-frequency filter 801 and may have a higher transmission frequency than the first low-frequency filter 801.

An interval between reference locations belonging to the third area 830 may be less than the second threshold value. The projection device 100 may apply a third low-frequency filter 803 as an interval between reference locations is less than the second threshold value. The third low-frequency filter 803 may be a weaker low-frequency filter than the second low-frequency filter 802 and may have a higher transmission frequency than the second low-frequency filter 802.

The projection device 100 may prevent aliasing while maintaining details of an image as much as possible, by applying a different low frequency area for each area. The projection device 100 may generate a correction image with minimal aliasing.

In the disclosure, when a low-frequency filter is applied to an input image, it may mean that convolution is performed between the low-frequency filter and the input image. Convolution is an image processing method using a filter with a weight and refers to a method of multiplying a pixel value of an input image by the weight (or coefficient) included in the filter and obtaining the sum. The filter is also referred to as a mask, a window, or a kernel. That is, values included in a Laplacian filter may be weights (values indicating how much corresponding pixels will be used).

For example, the first low-frequency filter 801 may be a filter that assigns a weight of 0.5 to a pixel value of a current input image and neighboring pixel values.

For example, the second low-frequency filter 802 may be a filter that assigns a weight of 0.2 to a current pixel value of a current input image and assigns a weight of 0.1 to neighboring pixel values.

For example, the third low-frequency filter 803 may be a filter that assigns a weight of 0.9 to a current pixel value of a current input image and assigns a weight of 0.1 to neighboring pixel values.

The above weights are only examples for convenience of explanation, and the disclosure is not limited thereto.

FIG. 9 is a flowchart for describing an operation in which a projection device adjusts a size of an effective pixel area of a correction image, according to an embodiment of the disclosure.

Referring to FIG. 9, in operation 910, the projection device 100 according to an embodiment of the disclosure may generate a correction image from an input image. The projection device 100 may generate a correction image in which a pixel value is written, through operations 410 and 420 of FIG. 4A.

In operation 920, the projection device 100 according to an embodiment of the disclosure may obtain positional relationship information between a screen and a projector. The positional relationship information may include a distance between the screen and the projector.

In operation 930, the projection device 100 according to an embodiment of the disclosure may adjust a size of a first area (effective pixel area) of the correction image, based on the positional relationship information.

The projection device 100 according to an embodiment of the disclosure may adjust a distance parameter for determining an interval between reference locations, based on the positional relationship information. The projection device 100 may determine a size of an effective pixel area of the correction image, by adjusting the distance parameter.

For example, as the distance parameter increases, the interval between reference locations may increase and the effective pixel area of the correction image corresponding to a reference location may decrease. For example, as the distance parameter decreases, the interval between reference locations may decrease and the effective pixel area of the correction image corresponding to the reference location may increase.

For example, as a distance between the projection device 100 and the screen increases, the projection device 100 may increase a distance parameter value so that a size of the effective pixel area of the correction image decreases.

Also, for example, as a distance between the projection device 100 and the screen decreases, the projection device 100 may reduce a distance parameter value so that a size of the effective pixel area of the correction image increases.

In operation 940, the projection device 100 according to an embodiment of the disclosure may control the projector to project the correction image onto the screen. The projection device 100 may display a projection image on the screen.

The projection device 100 according to an embodiment of the disclosure may display a size of the effective pixel area in the projection image constant even when a distance between the projection device 100 and the screen increases or decreases, by adjusting the distance parameter based on the positional relationship information.

FIG. 10 is a diagram illustrating an operation in which a projection device adjusts a size of an effective pixel area of a correction image according to a distance parameter, according to an embodiment of the disclosure.

Referring to FIG. 10, the projection device 100 according to an embodiment of the disclosure may adjust a size of an effective pixel area of a correction image according to a distance parameter.

The distance parameter may be a factor for determining an interval between reference locations of an input image. The projection device 100 may increase or decrease an interval between reference locations of the input image by adjusting the distance parameter. The projection device 100 may enlarge or reduce the effective pixel area of the correction image by adjusting the distance parameter. Even when the distance parameter is adjusted, an overall size of the correction image may be constant and the effective pixel area may be enlarged or reduced.

For example, in Equation 2, when a u value and a v value of a correction image increase by 1, an x value and a y value of a reference location may increase in proportion to d. For example, when (u, v) increase in an order of (0, 1), (0, 2), and (0, 3) and d is 1, the reference location may sequentially increase in an order of (0, 1), (0, 2), and (0, 3), and when d is 2, the reference location may increase at a wider interval in an order of (0, 2), (0, 4), and (0, 6).

For example, referring to 1001, when a distance parameter is small, a reference interval may be narrow and an effective pixel area 1021 of a correction image 1020 may be enlarged. For example, reference locations included in a first reference image 1070 may be within a coordinate range of an input image 1010. Accordingly, the projection device 100 may generate the correction image 1020 in which the effective pixel area 1021 is large, by referencing a pixel value of the input image 1010 having the narrow reference interval. The term "reference image" refers to an image including a reference location.

Alternatively, for example, referring to 1002, when a distance parameter is large, a reference interval may be wide and an effective pixel area 1051 of a correction image 1050 may be reduced. For example, at least some of reference locations included in a second reference image 1080 may be outside the coordinate range of the input image 1010. Accordingly, the projection device 100 may generate the correction image 1050 in which the effective pixel area 1051 is small, by referencing a pixel value of the input image 1010 having the wide reference interval.

The projection device 100 according to an embodiment of the disclosure may set the distance parameter to an appropriate value so that a reference location is within the coordinate range of the input image 1010. For example, the projection device 100 may adjust the distance parameter such that an effective pixel area is smaller than the effective pixel area 1021 of the correction image 1020 of 1001 and is larger than the effective pixel area 1051 of the correction image 1050 of 1002.

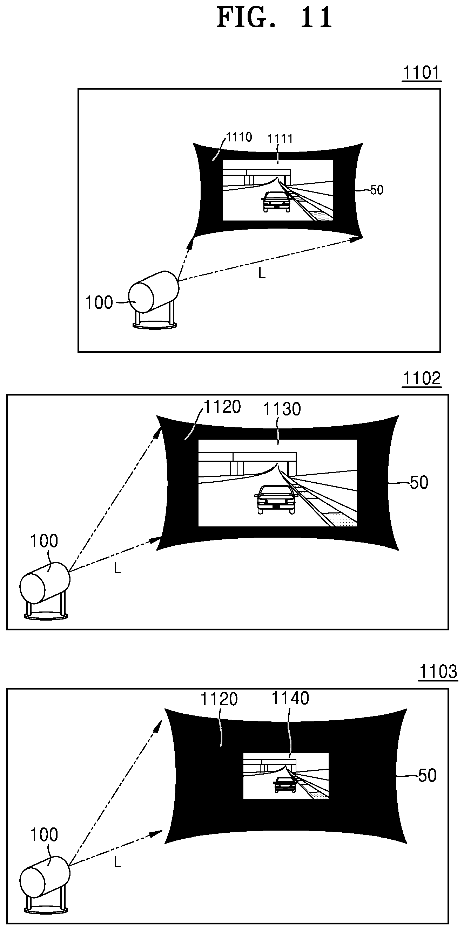

For example, the distance parameter may be a value appropriately determined through a resolution of an image and a parameter of a lens. For example, the distance parameter may be adjusted through positional relationship information between a screen and a projector described with reference to FIG. 11. For example, the distance parameter may be adjusted by user settings.

Referring to 1001, the projection device 100 may display a projection screen 1030 on the screen, when the correction image 1020 in which the effective pixel area 1021 is large and a black area 1022 is small is projected through a fisheye lens. There may be no distortion deformation in an effective pixel area of the projection screen 1030, and a size of the effective pixel area may be large, like the correction image 1020.

Referring to 1002, the projection device 100 may display the projection screen 1060 on the screen when the correction image 1050 in which the effective pixel area 1051 is small and a black area 1052 is large is projected through the fisheye lens. There may be no distortion deformation in an effective pixel area of the projection screen 1060, and a size of the effective pixel area may be small, like the correction image 1050.

FIG. 11 is a diagram illustrating an operation of determining a size of a projection screen and a size of a correction image according to positional relationship information between a projection device and a screen, according to an embodiment of the disclosure.

Referring to FIG. 11, the projection device 100 according to an embodiment of the disclosure may include at least one sensor. The projection device 100 may obtain positional relationship information between the projection device 100 and the screen 50 through the at least one sensor. For example, the positional relationship information may include a distance between the projection device 100 and the screen 50. For example, the at least one sensor may include a distance sensor.

The projection device 100 may display a projection screen 1110 to become smaller on the screen 50 as a distance between the projection device 100 and the screen 50 decreases (see 1101). The projection device 100 may display the projection screen 1120 to become larger on the screen 50 as a distance between the projection device 100 and the screen 50 increases (see 1102 and 1103).

In an embodiment of the disclosure, as a distance between the projection device 100 and the screen 50 decreases, a projection screen 1110 may become smaller, and thus, an effective pixel area 1111 may also become smaller. As a distance between the projection device 100 and the screen 50 increases, a projection screen 1120 becomes larger, and thus, an effective pixel area 1130 may also become larger.

In an embodiment of the disclosure, the projection device 100 may display a size of an effective pixel area in a projection screen to be constant even when a distance between the projection device 100 and the screen 50 increases or decreases, by adjusting a distance parameter. For example, a mural or framed image may always be displayed at a constant size on the screen 50 regardless of whether a distance between the projection device 100 and the screen 50 increases or decreases.

For example, the projection device 100 may adjust a distance parameter for determining an interval between reference locations, based on positional relationship information. The projection device 100 may determine a size of an effective pixel area of a correction image, by adjusting the distance parameter.

For example, in 1103, the projection device 100 may set the distance parameter to a large value so that as a distance between the projection device 100 and the screen 50 increases, a size of the effective pixel area of the correction image decreases. The projection device 100 may keep a size of the effective pixel area 1140 constant even when the projection screen 1120 increases, by setting the distance parameter to a large value.

Also, for example, although not shown, the projection device 100 may set the distance parameter to a small value so that as a distance between the projection device 100 and the screen 50 decreases, a size of the effective pixel area of the correction image increases. The projection device 100 may keep a size of the effective pixel area constant even when the projection screen becomes smaller, by setting the distance parameter to a small value.

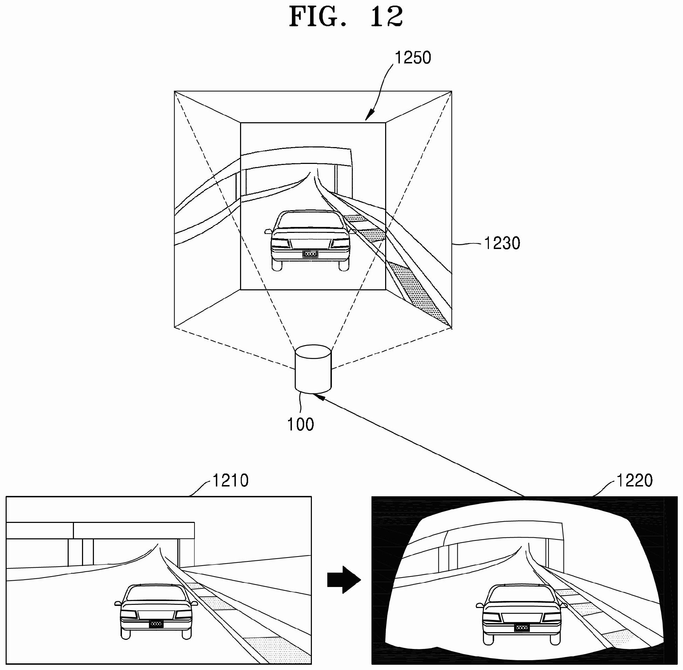

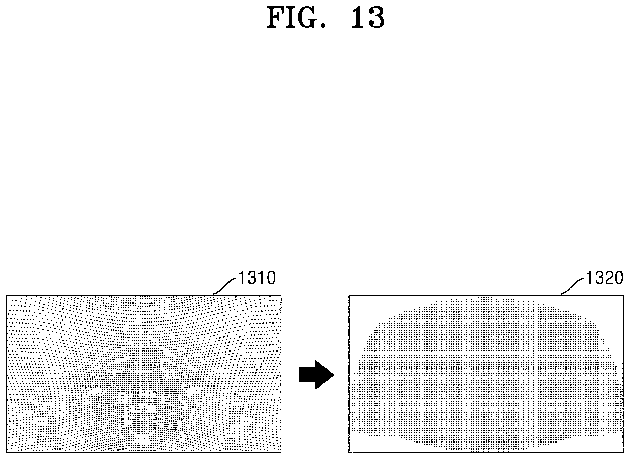

FIG. 12 is a diagram for describing an operation in which a projection device projects an image to a multi-screen, according to an embodiment of the disclosure. FIG. 13 is a diagram illustrating a multi-surface input image and a multi-surface correction image, according to an embodiment of the disclosure.

Referring to FIG. 12, the projection device 100 according to an embodiment of the disclosure may perform 360° projection. The projection device 100 may project an image onto a screen 1250 including multi-surfaces. The screen 1250 may form a plurality of wall surfaces. For example, the screen 1250 may include at least one of a front surface, side surfaces (a right surface and a left surface), a ceiling, or a floor.

The projection device 100 according to an embodiment of the disclosure may generate a correction image 1220 from an input image 1210. The projection device 100 may generate the correction image 1220 having barrel distortion corresponding to reverse deformation to pincushion distortion. The projection device 100 may project the correction image 1220 onto the screen 1250. Pincushion distortion may not occur in a projection screen 1230 projected through the projection device 100. As the correction image 1220 is distorted through a fisheye lens, the correction image 1220 may be projected onto the multi-surface screen 1250 in the same shape as the input image 1210.

The projection device 100 according to an embodiment of the disclosure may obtain positional relationship information between the projection device 100 and the screen. For example, the projection device 100 may obtain distance information, angle information, etc. between the projection device 100 and the wall surfaces of the screen. For example, the projection device 100 may obtain distance information between the projection device 100 and the wall surfaces including the front surface, the side surfaces, the ceiling, and the floor through a distance sensor. For example, the projection device 100 may obtain distance information between the wall surfaces including the front surface, the side surfaces, the ceiling, and the floor through a user input.

The projection device 100 according to an embodiment of the disclosure may calculate a projection point where pixels transmitted through the fisheye lens 140 meet each wall surface. For example, the projection device 100 may calculate a location of a projection point to be projected onto each wall surface when the input image is transmitted through the fisheye lens 140, based on the distance information between the wall surfaces and pixel coordinates of the image.

The projection device 100 according to an embedment may calculate a reference location by two-dimensionally projecting the projection point. In FIG. 13, a reference image 1310 including a reference location of pixels of an input image is illustrated. The reference image 1310 may include a reference location of a pixel distorted when each of a plurality of pixels belonging to a correction image 1320 is projected through a fisheye lens. An interval between the plurality of pixels belonging to the correction image 1320 may be constant.

The projection device 100 according to an embodiment of the disclosure may obtain a pixel value of the input image to be referenced for a pixel value of the correction image 1320 by using the reference location. For example, the projection device 100 may use a pixel value of the input image corresponding to the reference location as a pixel value of the correction image, which has been described above with reference to FIGS. 4A and 4B.

The projection device 100 according to an embodiment of the disclosure may determine a low-frequency filter to be applied to the input image by using the reference location. The projection device 100 may calculate a pixel value of the correction image by using the determined low-frequency filter. For example, the projection device 100 may use a different low-frequency filter according to an area between the wall surfaces, a central area, and an outer area, which has been described above with reference to FIG. 6.

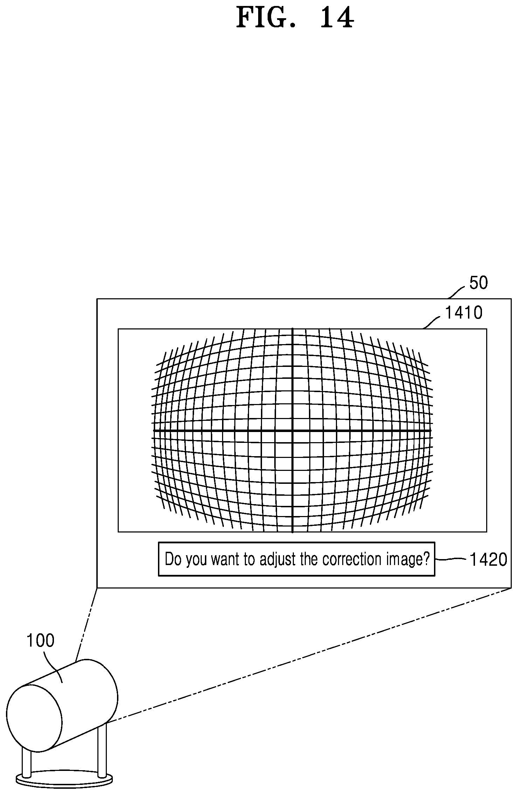

FIG. 14 is a diagram illustrating a graphical user interface enabling adjustment of a correction image, according to an embodiment of the disclosure.

Referring to FIG. 14, the projection device 100 according to an embodiment of the disclosure may output a graphical user interface for inquiring about whether to adjust a correction image to the screen 50. The graphical user interface may include a correction image 1410 generated before being projected onto the screen 50 and an inquiry 1420 about whether to adjust the correction image 1410. The correction image 1410 may be displayed as a grid image, but the disclosure is not limited thereto. The inquiry 1420 may include a user inquiry such as "Do you want to adjust the correction image?".

A user may check whether reverse deformation distortion of the correction image generated from an input image before being projected onto the screen 50 is appropriate and a ratio between an effective pixel area and a black area is appropriate through the graphical user interface.

The user may adjust a degree of correction of the correction image 1410 through a control device (e.g., a remote controller) connected to the projection device 100 by wire or wirelessly. For example, the projection device 100 may change a degree of correction of the correction image 1410 based on a user input. For example, the projection device 100 may change a size of a central area, a size of an outer area, a size of an effective pixel area, and a size of a black area of the correction image 1410.

The projection device 100 may generate a correction image customized according to a user input and may project a user-customized image onto the screen.

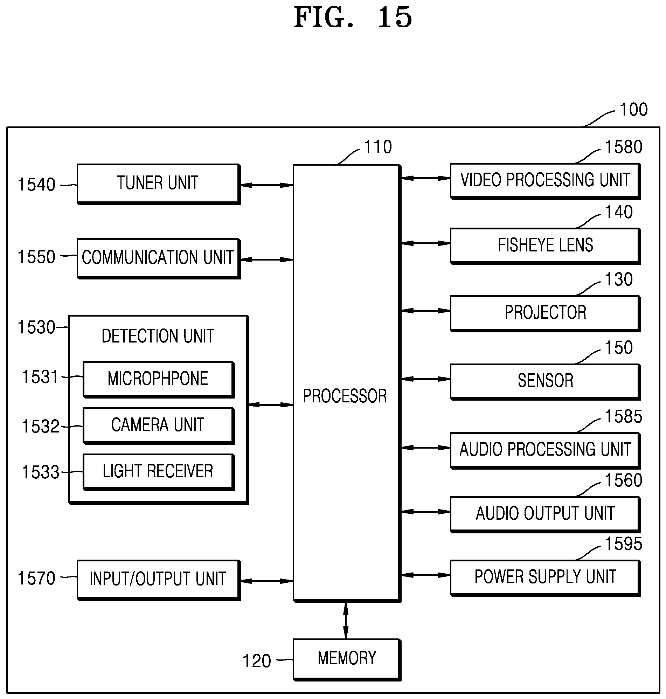

FIG. 15 is a diagram illustrating a detailed configuration of a projection device, according to an embodiment of the disclosure.

Referring to FIG. 15, the projection device 100 may include a tuner unit 1540, the processor 110, a communication unit 1550, a detection unit 1530, an input/output unit 1570, a video processing unit 1580, an audio processing unit 1585, an audio output unit 1560, a power supply unit 1595, the memory 120, the projector 130, the fisheye lens 140, and a sensor 150. In FIG. 15, the same description as that made above will be omitted.

The tuner unit 1540 according to an embodiment of the disclosure may tune and select only a frequency of a channel to be received by the projection device 100 from among radio wave components by performing amplification, mixing, and/or resonance on a broadcast signal that is received by wire or wirelessly. The broadcast signal includes an audio, a video, and additional information (e.g., an electronic program guide (EPG)).

The tuner unit 1540 may receive a broadcast signal from any of various sources such as a terrestrial broadcasting station, a cable broadcasting station, a satellite broadcasting station, or an Internet broadcasting station. The tuner unit 1540 may receive a broadcast signal from a source such as an analog broadcasting station or a digital broadcasting station.

The communication unit 1550 may transmit and receive data or a signal to and from an external device or a server. For example, the communication unit 1550 may include a Wi-Fi module, a Bluetooth module, an infrared communication module, a wireless communication module, a LAN module, an Ethernet module, and a wired communication module. In this case, each communication module may be implemented as at least one hardware chip.

The Wi-Fi module and the Bluetooth module respectively perform communication by using a Wi-Fi method and a Bluetooth method. When the Wi-Fi module or the Bluetooth module is used, various connection information such as SSID and session key may be first transmitted and received, communication connection is established by using the various connection information, and then various information may be transmitted and received. The wireless communication module may include at least one communication chip that performs communication according to various wireless communication standards such as Zigbee, 3^{rd} generation (3G), 3^{rd} generation partnership project (3GPP), long term evolution (LTE), LTE advanced (LTE-A), 4^{th} generation (4G), and 5^{th} generation (5G).

The detection unit 1530 may detect a user's voice, image, or interaction, and may include a microphone 1531, a camera unit 1532, and a light receiver 1533.

The microphone 1531 receives a voice uttered by the user. The microphone 1531 may convert the received voice into an electrical signal and may output the electrical signal to the processor 110.

The light receiver 1533 receives an optical signal (including a control signal) from an external control device through the projector 130. The light receiver 1533 may receive an optical signal corresponding to a user input (e.g., a touch, a press, a touch gesture, a voice, or a motion) from the control device. A control signal may be extracted from the received optical signal under the control by the processor 110.

The input/output unit 1570 according to an embodiment of the disclosure may receive a video (e.g., a moving image), an audio (e.g., voice or music), and additional information (e.g., EPG) from the outside of the projection device 100. The input/output unit 1570 may include any one of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

The video processing unit 1580 according to an embodiment of the disclosure performs processing on video data received by the projection device 100. The video processing unit 1580 may perform various image processing such as decoding, scaling, noise cancelling, frame rate conversion, and resolution conversion on the video data.

The processor 110 according to an embodiment of the disclosure may obtain an input image by executing one or more instructions stored in the memory 120. The input image may be an image pre-stored in the memory 120 or an image received from an external device through the tuner unit 1540 or the communication unit 1550. Also, the input image may be an image on which various image processing such as decoding, scaling, noise cancelling, frame rate conversion, or resolution conversion has been performed by the video processing unit 1580.

The projector 130 according to an embodiment of the disclosure generates a driving signal by converting an image signal, a data signal, an OSD signal, and a control signal processed by the processor 110.

The audio processing unit 1585 processes audio data. The audio processing unit 1585 may perform various processing such as decoding or amplification, and noise cancelling on the audio data. The audio processing unit 1585 may include a plurality of audio processing modules to process audio data corresponding to a plurality of pieces of content.

The audio output unit 1560 outputs an audio included in a broadcast signal received through the tuner unit 1540 under the control by the processor 110. The audio output unit 1560 may output an audio (e.g., voice or sound) input through the communication unit 1550 or the input/output unit 1570. Also, the audio output unit 1560 may output an audio stored in the memory 120 under the control by the processor 110. The audio output unit 1560 may include at least one of a speaker, a headphone output terminal, or a Sony/Phillips digital interface (S/PDIF) output terminal.

The power supply unit 1595 supplies power input from an external power supply source to elements in the projection device 100 under the control by the processor 110. Also, the power supply unit 1595 may supply power output from one or more batteries (not shown) located in the projection device 100 to the elements under the control by the processor 110.

The sensor 150 according to an embodiment of the disclosure may detect a state around the projection device 100 and may transmit detected information to the processor 110. The sensor 150 may include an image sensor and a depth sensor (or a distance sensor).

The image sensor according to an embodiment of the disclosure may obtain an image frame such as a still image or a moving image. For example, the image sensor may capture an image outside the projection device 100. For example, the image sensor may capture an image projected onto a screen. An image captured by the image sensor may be processed by the processor 110 or a separate image processor.

The depth sensor according to an embodiment of the disclosure may obtain depth information about one or more objects included in a space. The depth information may correspond to a distance from the depth sensor to a specific object, and a depth value may increase as a distance from the depth sensor to the specific object increases. The depth sensor according to an embodiment of the disclosure may obtain depth information of an object by using various methods. For example, the depth sensor may obtain depth information by using at least one of a time of flight (TOF) method, a stereo image method, or a structured light method.

The depth sensor according to an embodiment of the disclosure may include at least one camera and may obtain depth information about an actual space included in a field of view (FOV) of the camera included in the depth sensor. The depth sensor may sense a distance between the projection device and the center or at least one reference point included in the screen.

Also, the sensor 150 may include an acceleration sensor, a position sensor, a temperature/humidity sensor, an illuminance sensor, a geomagnetic sensor, a gyroscope sensor, and a microphone in addition to the image sensor and the depth sensor. However, the disclosure is not limited thereto.

The at least one processor 110 according to an embodiment of the disclosure executes the one or more instructions to generate a correction image that corrects distortion of an input image projected onto a screen through the fisheye lens by calculating a reference location based on pixel coordinates of the correction image, and setting a pixel value of the correction image by referencing a pixel value of the input image corresponding to the reference location.

The at least one processor 110 according to an embodiment of the disclosure executes the one or more instructions to control the projector to project the generated correction image onto the screen.

The at least one processor 110 according to an embodiment of the disclosure executes the one or more instructions to calculate the reference location based on at least one of the pixel coordinates of the correction image, a specification of the fisheye lens, or a distance between center coordinates of the correction image and the pixel coordinates of the correction image.

An interval between the reference locations may correspond to an interval between projection points as pixels of the correction image are transmitted through the fisheye lens.

The at least one processor 110 according to an embodiment of the disclosure executes the one or more instructions to calculate a reference location corresponding to each of a plurality of pixels of the correction image.

The at least one processor 110 according to an embodiment of the disclosure executes the one or more instructions to, when the reference location is within a pixel coordinate range of the input image, set a pixel value of the correction image by referencing a pixel value of the input image.

The at least one processor 110 according to an embodiment of the disclosure executes the one or more instructions to generate an effective pixel area of the correction image by referencing the pixel value of the input image.

The effective pixel area of the correction image may represent reverse deformation to distortion in an image generated by the fisheye lens.

The at least one processor 110 according to an embodiment of the disclosure executes the one or more instructions to calculate a reference location corresponding to each of a plurality of pixels of the correction image.

The at least one processor 110 according to an embodiment of the disclosure executes the one or more instructions to, when the reference location is outside a pixel coordinate range of the input image, set a pixel value of the correction image to a defined value.

The at least one processor 110 according to an embodiment of the disclosure executes the one or more instructions to generate a black area of the correction image by setting the pixel value of the correction image to the defined value.

The at least one processor 110 according to an embodiment of the disclosure executes the one or more instructions to determine a size of the effective pixel area of the correction image, based on a distance parameter for determining an interval between the reference locations.

As the distance parameter increases, the effective pixel area of the correction image may decrease. As the distance parameter decreases, the effective pixel area of the correction image may increase.

The at least one processor 110 according to an embodiment of the disclosure executes the one or more instructions to obtain positional relationship information between the projection device and the screen through the at least one sensor.

The at least one processor 110 according to an embodiment of the disclosure executes the one or more instructions to adjust a distance parameter for determining an interval between the reference locations based on the positional relationship information.

The at least one processor 110 according to an embodiment of the disclosure executes the one or more instructions to determine a size of the effective pixel area of the correction image by adjusting the distance parameter.

The at least one processor 110 according to an embodiment of the disclosure executes the one or more instructions to adjust the distance parameter so that as a distance between the projection device and the screen increases, a size of the effective pixel area of the correction image decreases.

The correction image may include a first pixel and a second pixel adjacent to the first pixel. The at least one processor 110 according to an embodiment of the disclosure executes the one or more instructions to calculate an interval between a first reference location corresponding to the first pixel and a second reference location corresponding to the second pixel.

The at least one processor 110 according to an embodiment of the disclosure executes the one or more instructions to determine a low-frequency filter based on the interval between the first reference location and the second reference location.

The at least one processor 110 according to an embodiment of the disclosure executes the one or more instructions to calculate the first pixel value of the correction image by applying the low-frequency filter to the input image.

The at least one processor 110 according to an embodiment of the disclosure executes the one or more instructions to apply a first low-frequency filter to the input image when the interval between the first reference location and the second reference location is greater than or equal to a threshold value.

The at least one processor 110 according to an embodiment of the disclosure executes the one or more instructions to apply a second low-frequency filter when the interval between the first reference location and the second reference location is less than the threshold value.

A transmission frequency of the first low-frequency filter may be lower than a transmission frequency of the second low-frequency filter.

The interval between the first reference location and the second reference location may include at least one of a first direction line segment length connecting the first reference location to the second reference location or an orthogonal distance between the first reference location and the second reference location.

An operating method of a projection device for projecting an image according to an embodiment of the disclosure includes generating a correction image that corrects distortion of an input image projected onto a screen through the fisheye lens by calculating a reference location based on pixel coordinates of the correction image and setting a pixel value of the correction image by referencing a pixel value of the input image corresponding to the reference location; and controlling a projector to project the generated correction image onto the screen.

The generating of the correction image may include calculating the reference location based on at least one of pixel coordinates of the correction image, a distance parameter, a specification of the fisheye lens, or a distance between center coordinates of the correction image and the pixel coordinates of the correction image.

The generating of the correction image may include calculating a reference location corresponding to each of a plurality of pixels of the correction image.

The generating of the correction image may include referencing a pixel value of the input image for a pixel value of the correction image, when the reference location is within a pixel coordinate range of the input image.

The generating of the correction image may include generating an effective pixel area of the correction image by referencing the pixel value of the input image.

The generating of the correction image may include calculating a reference location corresponding to each of a plurality of pixels of the correction image.

The generating of the correction image may include setting a pixel value of the correction image to black, when the reference location is outside the pixel coordinate range of the input image.

The generating of the correction image may include generating a black area of the correction image by setting a pixel value of the correction image to black.

The generating of the correction image may include determining a size of an effective pixel area of the correction image, based on a distance parameter for determining an interval between the reference locations.

The generating of the correction image may include calculating an interval between a first reference location corresponding to the first pixel and a second reference location corresponding to the second pixel.

The generating of the correction image may include determining a low-frequency filter based on the interval between the first reference location and the second reference location.

The generating of the correction image may include calculating the first pixel value of the correction image by applying the low-frequency filter to the input image.

An embodiment of the disclosure may provide a computer-readable recording medium having recorded thereon a program for performing an operating method of a projection device for projecting an image on a computer.

The machine-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment of the disclosure, methods according to an embodiment of the disclosure may be provided in a computer program product. The computer program product may be a product purchasable between a seller and a purchaser. The computer program product may be distributed in the form of a machine-readable storage medium (e.g., a compact disc read-only memory (CD-ROM)), or distributed (e.g., downloaded or uploaded) online via an application store or between two user devices (e.g., smartphones) directly. When distributed online, at least part of the computer program product (e.g., a downloadable application) may be temporarily generated or at least temporarily stored in a machine-readable storage medium, such as memory of a server of a manufacturer, a server of an application store, or a relay server.

## Claims

1. A projection device (100) for projecting an image, the projection device (100) comprising:
a projector (130);
a fisheye lens (140);
memory (120) storing one or more instructions; and
at least one processor including processing circuitry, operatively coupled to the memory (120),
wherein the one or more instructions, when executed by the at least one processor (110) individually or collectively, cause the projection device (100) to:
generate a correction image (220) that corrects distortion of an input image (210) projected onto a screen through the fisheye lens (140), wherein the correction image (220) is generated by:
calculating a plurality of reference locations, each calculated reference location of the plurality of calculated reference locations being based respectively on pixel coordinates of a pixel of a plurality of pixels of the generated correction image (220), and
setting a pixel value of each pixel of the plurality of pixels of the generated correction image (220) by referencing a pixel value of the input image (210) corresponding to each respective calculated reference location of the plurality of calculated reference locations, and
control the projector (130) to project the generated correction image (220) onto the screen through the fisheye lens (140).

2. The projection device (100) of claim 1, wherein the one or more instructions, when executed by the at least one processor (110), cause the projection device (100) to:
calculate the plurality of reference locations based on at least one of the pixel coordinates of the plurality of pixels of the generated correction image (220), a distance parameter, a specification of the fisheye lens (140), or a distance between center coordinates of the generated correction image (220) and the pixel coordinates of the plurality of pixels of the generated correction image (220).

3. The projection device (100) of claim 1 or 2, wherein
an interval between calculated reference locations of the plurality of calculated reference locations corresponds to an interval between projection points as the plurality of pixels of the generated correction image (220) are transmitted through the fisheye lens (140).

4. The projection device (100) of any one of claims 1 to 3, wherein the one or more instructions, when executed by the at least one processor (110), cause the projection device (100) to:
calculate the plurality of reference locations respectively corresponding to each pixel of the plurality of pixels of the generated correction image (220),
based on a calculated reference location of the plurality of calculated reference locations being within a pixel coordinate range of the input image (210), set a pixel value of the generated correction image (220) corresponding to the calculated reference location of the plurality of calculated reference locations by referencing the pixel value of the input image (210) corresponding to the calculated reference location of the plurality of calculated reference locations, and
generate an effective pixel area (221) of the generated correction image (220) by referencing the pixel value of the input image (210) corresponding to the calculated reference location of the plurality of calculated reference locations.

5. The projection device (100) of claim 4, wherein
the effective pixel area (221) of the generated correction image (220) represents reverse deformation to distortion in an image generated by the fisheye lens (140).

6. The projection device (100) of any one of claims 1 to 5, wherein the one or more instructions, when executed by the at least one processor (110), cause the projection device (100) to:
calculate the plurality of reference locations respectively corresponding to each pixel of the plurality of pixels of the generated correction image (220),
based on a calculated reference location of the plurality of calculated reference locations being outside a pixel coordinate range of the input image (210), set a pixel value of the generated correction image (220) corresponding to the calculated reference location of the plurality of calculated reference locations to a defined value, and
generate a black area (222) of the generated correction image (220) by setting the pixel value of the generated correction image (220) corresponding to the calculated reference location of the plurality of calculated reference locations to the defined value.

7. The projection device (100) of any one of claims 1 to 6, wherein the one or more instructions, when executed by the at least one processor (110), cause the projection device (100) to determine a size of an effective pixel area (221) of the generated correction image (220) based on a distance parameter for determining an interval between calculated reference locations of the plurality of calculated reference locations.

8. The projection device (100) of claim 7, wherein
the effective pixel area (221) of the generated correction image (220) decreases as the distance parameter increases, and
the effective pixel area (221) of the generated correction image (220) increases as the distance parameter decreases.

9. The projection device (100) of any one of claims 1 to 8, further comprising:
at least one sensor (150),
wherein the one or more instructions, when executed by the at least one processor (110), cause the projection device (100) to:
obtain positional relationship information with respect to the projection device (100) and the screen through the at least one sensor (150),
adjust a distance parameter for determining an interval between the calculated reference locations of the plurality of calculated reference locations based on the positional relationship information, and
determine a size of an effective pixel area (221) of the generated correction image (220) by adjusting the distance parameter.

10. The projection device (100) of claim 9, wherein the one or more instructions, when executed by the at least one processor (110), cause the projection device (100) to adjust the distance parameter so that as a distance between the projection device (100) and the screen increases, a size of the effective pixel area (221) of the generated correction image (220) decreases.

11. The projection device (100) of any one of claims 1 to 10, wherein
the generated correction image (220) includes a first pixel, and a second pixel adjacent to the first pixel, and
wherein the one or more instructions, when executed by the at least one processor (110), cause the projection device (100) to:
calculate an interval between a first reference location corresponding to the first pixel and a second reference location corresponding to the second pixel,
determine a low-frequency filter based on the calculated interval between the first reference location and the second reference location, and
calculate the pixel value of the first pixel of the generated correction image (220) by applying the low-frequency filter to the input image (210).

12. The projection device (100) of claim 11, wherein the one or more instructions, when executed by the at least one processor (110), cause the projection device (100) to:
apply a first low-frequency filter to the input image (210) based on the interval between the first reference location and the second reference location being greater than a threshold value, and
apply a second low-frequency filter when based on interval between the first reference location and the second reference location being less than the threshold value,
wherein a transmission frequency of the first low-frequency filter is lower than a transmission frequency of the second low-frequency filter.

13. The projection device (100) of claim 11 or 12, wherein
the interval between the first reference location and the second reference location includes at least one of a first direction line segment length connecting the first reference location to the second reference location or an orthogonal distance between the first reference location and the second reference location.

14. An method of operating a projection device (100) for projecting an image, the projection device (100) including a projector (130) and a fisheye lens (140), the method comprising:
Generating (405: 410, 420) a correction image (220) that corrects distortion of an input image (210) projected onto a screen through the fisheye lens (140), by:
calculating (410) a plurality of reference locations, each calculated reference location of the plurality of calculated reference locations being based respectively on pixel coordinates of a pixel of a plurality of pixels of the generated correction image (220), and
setting (420) a pixel value of each pixel of the plurality of pixels of the generated correction image (220) by referencing a pixel value of the input image (210) corresponding to each respective calculated reference location of the plurality of calculated reference locations; and
controlling (430) the projector (130) to project the generated correction image (220) onto the screen through the fisheye lens (140).

15. A non-transitory computer-readable medium having instructions stored therein, which when executed by at least one processor cause the at least one processor (110) to execute a method of operating a projection device (100), the method comprising:
generating (405: 410, 420) a correction image (220), that corrects distortion of an input image (210) projected onto a screen through the fisheye lens (140), by:
calculating (410) a plurality of reference locations, each calculated reference location of the plurality of calculated reference locations being based respectively on pixel coordinates of a pixel of a plurality of pixels of the generated correction image (220), and
setting (420) a pixel value of each pixel of the plurality of pixels of the generated correction image (220) by referencing a pixel value of the input image (210) corresponding to each respective calculated reference location of the plurality of calculated reference locations; and
controlling (430) the projector (130) to project the generated correction image (220) onto the screen through the fisheye lens (140).
